# EUROPEAN PATENT SPECIFICATION

(11) **EP 0 463 153 B1**
(45) Date of publication and mention of the grant of the patent: **01.04.1998**
(21) Application number: 91903449.6
(22) Date of filing: 08.01.1991
(51) Int. Cl.: G02B 5/32, G03H 1/18, G02F 1/13, G03F 7/00

(54) **VOLUME PHASE HOLOGRAM WITH LIQUID CRYSTAL IN MICROVOIDS BETWEEN FRINGES**
VOLUMENPHASENHOLOGRAMM MIT FLÜSSIGKRISTALL IN DEN HOHLRÄUMEN ZWISCHEN DEN INTERFERENZSTREIFEN
HOLOGRAMME EN PHASE VOLUME AVEC CRISTAL LIQUIDE DANS DES MICROCAVITES ENTRE DES FRANGES

(30) Priority: 12.01.1990 US 464427
(43) Date of publication of application: 02.01.1992
(73) Proprietor: POLAROID CORPORATION, Cambridge, Massachusetts 02139 (US)
(72) Inventor: INGWALL, Richard, T., Newton, MA 02165 (US); TROLL, Mark, A., Somerville, MA 02143 (US); WHITNEY, Duncan, H., Beverly, MA 01915 (US)
(74) Representative: Smulders, Theodorus A.H.J., Ir.
(86) International application number: US9100142
(87) International publication number: WO9110926

(56) References cited:
- WO-A-88/04796
- Mol. Cryst. Liq. Cryst., vol. 152, 1987, Gordon and Breach Science Publishers S.A., (US), S. Sainov et al.: "Holographic diffraction grating controlled by means of nematic liquid crystal", pages 609-615
- Optical Engineering, vol. 28, no. 6, June 1989, Society of Photo-Optical Instrumentation Engineers, R.T. Ingwall et al.: "Mechanism of hologram formation in DMP-128 photo-polymer", pages 586-591
- Appl. Phys. Lett., vol. 40, no. 1, 1 January 1982, American Institute of Physics, N.G. Craighead et al.: "New display based on electrically induced index matching in an inhomogeneous medium", pages 22-24
- J. Appl. Phys., vol. 62, no. 9, 1 November 1987, American Institute of Physics, B.-G. Wu et al.: "Angular discrimination of light transmission through polymerdispersed liquid-crystal films", pages 3925-3931

## Description

This invention is concerned with composite volume phase holograms and other holographic optical elements, and more particularly with the provision of holographic elements having a discontinuous distribution of a separate phase containing a liquid crystal. These novel composite holographic optical elements exhibit different diffraction efficiency as a function of external stimuli, such as an applied electric field.

### Background of the Invention

U.S. Patent No. 4,970,129, issued November 13, 1990, of Richard T. Ingwall and Mark A. Troll, (corresponding to PCT Published Application WO 88/04796 published June 30, 1988), discloses and claims volume phase holograms characterized by the fact that microvoids between the fringes of the recorded interference pattern are at least partially filled with a material having an index of refraction different from that of the matrix. These void-filled holograms may be referred to as composite holograms. The material filling the microvoids changes the properties of the holographic element, e.g., it may provide enhanced stability, or it may modify the optical properties by changing the average refractive index. The nature and properties of such composite holograms have been described by R.T. Ingwall and M.A. Troll in "Mechanism of Hologram Formation in DMP-128 Photopolymer", Optical Engineering, Vol. 28, No. 6, pp. 586-591 (June 1989).

It is known to form a polymer film having a liquid crystal dispersed therein; see, for example, H.G. Craighead et al, "New Display Based On Electrically Induced Index Matching In An Inhomogeneous Medium", Appl. Phys. Lett., Vol. 40, No. 1, pp. 22-24 (1 January 1982), and Bao-Gang Wu et al, "Angular Discrimination of Light Transmission Through Polymer-Dispersed Liquid-Crystal Films", J. Appl. Phys., Vol. 62, No. 1, pp. 3925-3931 (1 November 1987). Such polymer-dispersed liquid crystal films may be prepared, e.g., by polymerization-induced phase separation or by thermally-induced phase separation. In either process, a homogeneous solution containing the liquid crystal and the polymer or polymer precursor is converted into a film or polymer matrix having liquid crystal droplets homogeneously dispersed therein. The utility of such films is based upon light scattering.

It also has been proposed to modulate a hologram by providing a liquid crystal in the surface grooves of a holographic diffraction grating. See Simeon Sainov et al, "Holographic Diffraction Grating Controlled By Means of Nematic Liquid Crystal", Mol. Cryst. Liq. Cryst., Vol. 152, pp. 609-615 (1987).

### Summary of the Invention

In accordance with the present invention, holographic optical elements are provided having a discontinuous, non-scattering distribution of a separate liquid crystal phase between the fringes. Such holographic optical elements exhibit changes in diffraction efficiency as a function of changes in the orientation of the liquid crystal by application of an electric field. These holographic optical elements therefore have the ability of acting as switchable holographic optical elements.

### Brief Description of Drawing

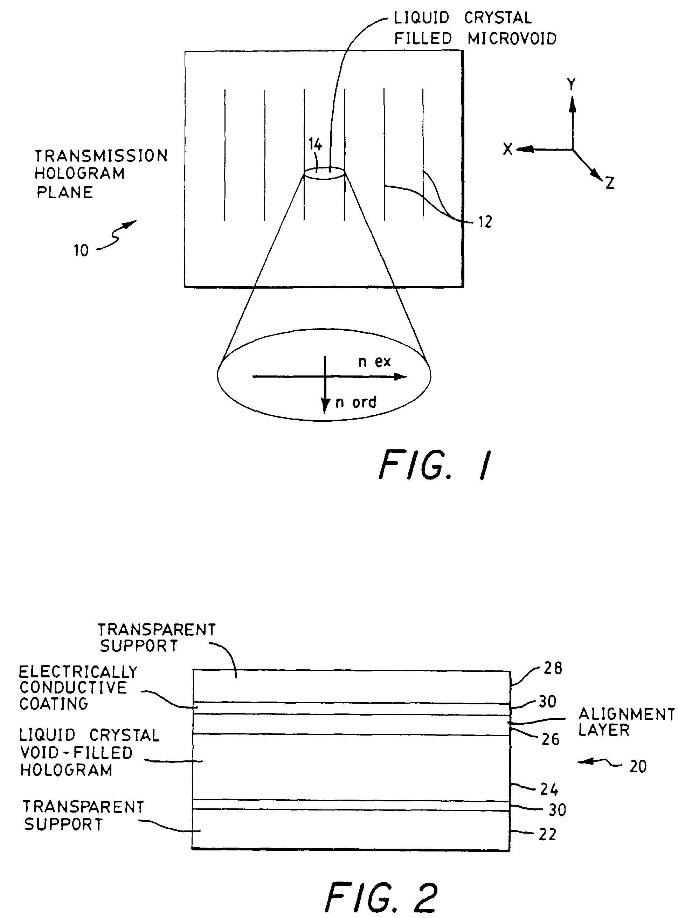

This invention may be further understood by reference to the drawing, wherein Fig. 1 illustrates a transmission hologram viewed from the top with a liquid crystal oriented in microvoids between the fringes with the long axis perpendicular to the fringes, and Fig. 2 illustrates a switchable cell containing a liquid crystal filled holographic composite layer.

### Detailed Description of the Invention

Volume phase holograms or holographic optical elements record information as a modulation of the refractive index of the medium in which the holographic recording is effected. Thus, the polymerization of a monomer present in a photopolymerizable film records the laser holographic exposure as a pattern of "fringes" or "strata" of polymer. The fringes are relatively perpendicular to the support in a volume phase transmission hologram, and relatively parallel to the support in a volume phase reflection hologram. The polymer comprising the fringes has a different index of refraction than the material between the fringes, and the resulting index differences permit reconstruction of the hologram.

As disclosed and claimed in the above mentioned U.S. Patent No. 4,970,129, it is possible to form volume phase holograms wherein microvoids are present between the fringes (such microvoids amplify the index modulation from that which would be obtained in their absence), and to modify the optical or other properties of the hologram by replacing air in the microvoids with a different material. In accordance with this invention, such microvoids are at least partially filled with a liquid crystal. The orientation of the liquid crystal within the microvoid may be changed by the application of an electric field. Liquid crystals are characterized by having one index of refraction along the long axis and a different index along the short axis. The change in refractive index upon reorientation is a function of the birefringence of the liquid crystal. By selecting a liquid crystal which has one of its indices of refraction substantially matching the index of refraction of the medium, it is possible to substantially reduce the diffraction efficiency of the hologram, even to the point of substantially eliminating the hologram, when the liquid crystal is appropriately oriented. Orientation in the opposite manner, e.g., by application of an electric field, provides a different index of refraction compared with that of the medium, thus providing an index difference. The resulting hologram therefore may be "switched" between the two diffraction efficiency conditions.

For convenience, the disclosure of the above mentioned Ingwall and Troll U.S. Patent No. 4,970,129, and the disclosure of the above mentioned Ingwall and Troll Optical Engineering article, are incorporated herein by reference.

More specifically, Fig. 1 shows a transmission hologram 10, viewed in the plane of the hologram, with the fringes 12 perpendicular to the plane of the hologram. For ease of understanding, only a single liquid crystal filled microvoid 14 is shown between the fringes 12, with the microvoid, shown for illustration as generally ellipsoid in shape, also enlarged to more clearly illustrate the long axis extraordinary index ("n ex") and the short axis ordinary index ("n ord") of the liquid crystal. The x, y and z directions also are indicated.

Fig. 2 illustrates a switchable cell 20 incorporating a liquid crystal void-filled hologram 24 (similar to hologram 12 of Fig. 1). The hologram 24 is carried on an electrically conductive coating 30, e.g., of indium tin oxide (ITO) on the inner surface of a transparent, e.g., glass, support 22. A second transparent support 28, carrying a conductive coating 30 on its inner surface, also carries an alignment layer 26 in contact with the surface of the hologram 24. Means, not shown, are provided to supply electrical voltage to form an electric field to change the alignment of the liquid crystal.

When the hologram is filled with the liquid crystal, a thin layer of liquid crystal may remain on the surface. The alignment layer 26 is provided to align surface liquid crystals, thereby preventing light scatter. In the preferred embodiments discussed below, it has been found that such an alignment layer does not influence or control the alignment of the liquid crystal in the microvoids.

In the preferred embodiments of this invention, the holographic optical element is formed in a photopolymerizable composition comprising a dye sensitizer such as methylene blue, a branched polyethylenimine as a polymerization initiator, and a free radical polymerizable ethylenic unsaturated monomer, e.g., an acrylic monomer, and lithium acrylate. Such photopolymerizable elements are described and claimed in U.S. Patent No. 4,588,664 issued May 13, 1986 to Herbert L. Fielding and Richard T. Ingwall. As disclosed in the cited Ingwall and Troll application and article, the microvoids are formed during the post-exposure processing. Incorporation of the liquid crystal into the microvoids is effected by heating the liquid crystal above its clearing temperature, and drawing the liquid crystal by capillary action into the microvoids. The filling of the microvoids is generally observed by a decrease in the brightness of the hologram. Liquid crystal switching is observed as a change in the diffraction efficiency of the liquid crystal filled hologram as a function of the birefringence of the liquid crystal and of field-induced molecular reorientation. Liquid crystal orientation is confirmed by the observation of different diffraction efficiencies depending upon the polarization of the read-beam used to measure diffraction efficiency.

It has further and surprisingly been found that liquid crystals will self-align in a particular direction when incorporated into a hologram of the above type, and that the direction of such self-alignment also may be changed by a simple pre-treatment of the microvoid surface prior to incorporating the liquid crystal. Thus, it has been found that an untreated transmission hologram spontaneously induced a planar alignment of a nematic liquid crystal with its long axis directed along the x-direction, i.e., perpendicular to the fringes, as illustrated in Fig. 1. When such a transmission hologram was treated, e.g., with stearic acid, prior to void filling, the spontaneous alignment was homeotropic, parallel to both the fringe planes and along the z-direction (film thickness). Reflection holograms not pre-treated with stearic acid exhibit spontaneous ordering of the liquid crystal such that the long axis is parallel in the xy-plane, whereas stearic acid treated reflection holograms spontaneously induced a homeotropic alignment of the liquid crystal.

The following examples are given for the purposes of illustration and are not to be considered as limiting the invention.

### Example 1

A series of holograms were prepared by coating a lithium acrylate/acrylic acid/polyethylenimine photopolymer film of the type described in Example 7 of the above-mentioned U.S. Patent No. 4,588,664 on ITO-coated glass. Following humidification to activate the film, holographic laser exposure, a flood exposure, and processing (as described in detail below), each hologram was filled with nematic liquid crystal RO-TN-570 (commercially available from Hoffman-LaRoche, and equivalent to liquid crystal E7 commercially available from E. Merck). Void filling with the liquid crystal was effected by heating the liquid crystal to about 80°C (i.e., above its clearing temperature) allowing the heated liquid crystal to imbibe into and fill the voids by capillary action, and then cooling the filled hologram. If necessary, excess liquid crystal was wiped off while still hot.

The average index of refraction of the polymeric matrix of the unfilled hologram is about 1.56. The ordinary index of RO-TN-570 liquid crystal is about 1.52, almost matching that of the unfilled hologram. As the liquid crystal fills the voids, the hologram appears to clear due to the reduced index difference. Cooling the filled hologram allows spontaneous orientation of the liquid crystal with a resulting increase in index modulation due to the higher extraordinary index of the liquid crystal (about 1.74 for RO-TN-570) and the hologram appeared much brighter.

The polarization dependent index of refraction of the liquid crystal filled hologram in the x, y and z planes, as measured using a Metricon PC 2000 Prism Coupler equipped with a He:Ne (6328 Angstrom) laser are shown below. With the laser beam polarized vertically (in the y direction shown in Fig. 1), the ordinary refractive index of the liquid crystal is addressed to the extent the liquid crystal is aligned, whereas when the laser beam is polarized horizontally the extraordinary index is addressed. The measured indices were:

| Hologram | n(x) | n(y) | n(z) |
|---|---|---|---|
| 1 | 1.607 | 1.586 | 1.544 |
| 2 | 1.579 | 1.561 | 1.547 |
| 3 | 1.548 | 1.548 | 1.576 |
| 4 | 1.572 | 1.571 | 1.539 |
| 5 | 1.562 | 1.562 | 1.532 |
| 6 | 1.546 | 1.546 | 1.579 |
| 7 | 1.543 | 1.541 | 1.571 |

Holograms 1-7 (prior to void filling with the liquid crystal) were prepared as follows:
Hologram 1 (transmission): The photopolymer layer had a thickness of 2 microns, the photosensitizer was sodium riboflavin-5-phosphate, and the plate was humidified for 7 minutes to activate it. Holographic exposure (5 seconds, 10 mJ/cm² was effected at an angle of 13° using an Argon laser (488 nm), the exposed plate dipped in a solution of 90 cc. methanol, 10 cc. acetic acid and 4 cc. water for 2 minutes, followed by a 2 minute dip in a solution of zirconium acetate (10%), acetic acid (4%), methanol (66%) and water (20%).
Hologram 2 (transmission): This hologram was prepared as above described for Hologram 1, except that the thickness was 5 microns and the exposure angle was 10°.
Hologram 3 (transmission): This hologram was prepared as described above for Hologram 2, except that the zirconium acetate-treated hologram was rinsed with isopropyl alcohol, and then soaked in a 5% solution of stearic acid in xylene for 5 minutes. The hologram was then rinsed in isopropanol and dried prior to void filling.
Hologram 4 (reflection): The photopolymer layer was 15 microns thick, and the photosensitizer was methylene blue. Holographic reflection exposure was effected with a Krypton laser (647 nm). Processing was as described for Hologram 1.
Hologram 5 (reflection): This hologram was prepared as described for Hologram 4 except the photopolymer layer was 10 microns thick, the photosensitizer was sodium-5-phosphate and exposure was to an Argon laser (488 nm).
Hologram 6 (reflection): This hologram was prepared as described for Hologram 5 except that the photopolymer thickness was 7 microns, and the zirconium acetate-treated hologram was soaked in stearic acid as described for Hologram 3.
Hologram 7 (reflection): This hologram was prepared as described for Hologram 6 except that the photopolymer thickness was 15 microns, and exposure was to a Krypton laser (647 nm).

Analysis of the measured indices of refraction showed that the assigned spontaneous orientation of the imbibed liquid crystal, and the different spontaneous orientation as a result of the stearic acid treatment, were appropriate.

The diffraction efficiencies (DE) of the above holograms (gratings) were measured and found to be:

| Transmission Hologram | DEₛ₋ₚₒₗ | DEₚ₋ₚₒₗ |
|---|---|---|
| 1 | 29% | 64% |
| 2 | 0.7% | 44% |
| 3 | 0.5% | 0.2% |

(DEₛ₋ₚₒₗ is the diffraction efficiency measured using light polarized parallel to the direction of the fringes, and DEₚ₋ₚₒₗ is the diffraction efficiency measured using light polarized approximately perpendicular to the direction of the fringes.

| Reflection Hologram | DE |
|---|---|
| 4 | 78% |
| 5 | N/A |
| 6 | 0% |
| 7 | 29% |

### Example 2

Switchable liquid crystal cells of the type shown in Fig. 2 were prepared by coupling an alignment layer with an E7 liquid crystal filled transmission hologram. The alignment layer was prepared by spin coating (1 minute at 4000 rpm) ITO-coated glass plate with a 1% solution of Nylon 6 in trichloroethylene. The coated plate was heated at 100°C for 1 hour, cooled, and then buffed 10 times in one direction on lint-free cloth to make an alignment layer. The diffraction efficiency of the hologram to p polarized light (parallel to incident axis) could be increased or decreased as a function of the applied voltage.

While the above examples have employed holograms made using the photopolymerizable composition of U.S. Patent No. 4,588,664, it will be understood that the invention is not so limited, and one may use any holographic element having microvoids between the fringes. Selection of liquid crystals suitable for use in this invention may be effected by routine screening tests, taking into consideration the relationship of the indices of refraction of the liquid crystal and of the unfilled hologram.

The treatment of holograms with a fatty acid, such as stearic acid, is disclosed in U.S. Patent No. 4,535,041 issued to Herbert L. Fielding and Richard T. Ingwall on August 13, 1985.

In addition to the use of an electrical field to vary the liquid crystal alignment, such variations may also be obtained by other known methods, e.g., application of thermal energy or a high intensity light beam.

## Claims

1. A volume phase holographic element, in which information is recorded as a pattern of fringes of a material having a different index of refraction than the material between the fringes, the material between the fringes having therein a distribution of fillable microvoids, characterized in that the microvoids between the fringes are at least partially filled with a liquid crystal.

2. A volume phase holographic element as defined in claim 1, wherein said element is a transmission hologram.

3. A volume phase holographic element as defined in claim 1, wherein said element is a reflection hologram.

4. A volume phase holographic element as defined in claim 1, wherein said liquid crystal is a nematic liquid crystal.

5. A volume phase holographic element as defined in claim 4, wherein said element is a transmission hologram and said nematic liquid crystal is oriented with its long axis perpendicular to said fringes.

6. A volume phase holographic element as defined in claim 1, wherein said element comprises branched polyethylenimine and a polymerized ethylenic monomer.

7. A switchable cell comprising, in sequence, a first transparent support carrying an electrically conductive coating, a volume phase holographic element, in which information is recorded as a pattern of fringes of a material having a different index of refraction than the material between the fringes, the material between the fringes having therein a distribution of fillable microvoids, wherein the microvoids between the fringes are at least partially filled with a liquid crystal, an alignment layer, and a second transparent support carrying an electrically conductive coating, and means to supply an electric current to said electrically conductive coatings.

## Patentansprüche

1. Volumen-Phasen-holographisches Element, in welchem Informationen als Muster von Interferenzstreifen (fringes) aus einem Material, dessen Brechungsindex sich von dem des Materials zwischen den Interferenzstreifen unterscheidet, aufgezeichnet sind, wobei das Material zwischen den Interferenzstreifen eine Verteilung von auffüllbaren Mikrohohlräumen enthält, dadurch gekennzeichnet, daß die Mikrohohlräume zwischen den Interferenzstreifen mindestens teilweise mit einem Flüssigkristall gefüllt sind.

2. Volumen-Phasen-holographisches Element nach Anspruch 1, worin das Element ein Transmissionshologramm darstellt.

3. Volumen-Phasen-holographisches Element nach Anspruch 1, worin das Element ein Reflexionshologramm darstellt.

4. Volumen-Phasen-holographisches Element nach Anspruch 1, worin der Flüssigkristall einen nematischen Flüssigkristall darstellt.

5. Volumen-Phasen-holographisches Element nach Anspruch 4, worin das Element ein Transmissionshologramm darstellt und der nematische Flüssigkristall mit seiner Längsachse senkrecht zu den Interferenzstreifen orientiert ist.

6. Volumen-Phasen-holographisches Element nach Anspruch 1, worin das Element verzweigtes Polyethylenimin und ein polymerisiertes ethylenisches Monomer enthält.

7. Schaltbare Zelle, enthaltend, in Abfolge, eine erste durchsichtige Unterlage, die eine elektrisch leitfähige Beschichtung, ein Volumen-Phasen-holographisches Element, in welchem die Informationen als Muster von Interferenzstreifen aus einem Material, dessen Brechungsindex sich von dem Brechungsindex des Materials zwischen den Interferenzstreifen unterscheidet, aufgezeichnet sind, wobei das Material zwischen den Interferenzstreifen eine Verteilung von auffüllbaren Mikrohohlräumen enthält, wobei die Mikrohohlräume zwischen den Interferenzstreifen mindestens teilweise mit einem Flüssigkristall gefüllt sind, eine Ausrichtungsschicht und eine zweite durchsichtige Unterlage mit einer elektrisch leitfähigen Beschichtung trägt, und Mittel zur Zuführung eines elektrischen Stromes zu den elektrisch leitfähigen Beschichtungen.

## Revendications

1. Elément holographique en phase volume, dans lequel des informations sont enregistrées sous la forme d'une combinaison de franges d'une matière présentant un indice de réfraction différent de celui de la matière se trouvant entre les franges, la matière entre les franges présentant intérieurement une distribution de microvides remplissables, caractérisé en ce que les microvides entre les franges sont au moins partiellement remplis avec un cristal liquide.

2. Elément holographique en phase volume selon la revendication 1, dans lequel ledit élément est un hologramme à transmission.

3. Elément holographique en phase volume selon la revendication 1, dans lequel ledit élément est un hologramme à réflexion.

4. Elément holographique en phase volume selon la revendication 1, dans lequel ledit cristal liquide est un cristal liquide nématique.

5. Elément holographique en phase volume selon la revendication 4, dans lequel ledit élément est un hologramme à transmission et ledit crystal liquide nématique est orienté avec son grand axe perpendiculaire auxdites franges.

6. Elément holographique en phase volume selon la revendication 1, dans lequel ledit élément comprend une poly(éthylène imine) ramifiée et un monomère éthylénique polymérisé.

7. Cellule commutable comprenant, successivement, un premier support transparent portant un revêtement conducteur de l'électricité, un élément holographique en phase volume, dans lequel des informations sont enregistrées sous la forme d'une combinaison de franges d'une matière présentant un indice de réfraction différent de celui de la matière située entre les franges, la matière située entre les franges présentant intérieurement une distribution de microvides remplissables, les microvides entre les franges étant au moins remplis avec un cristal liquide, une couche d'alignement et un deuxième support transparent portant un revêtement conducteur de l'électricité, et un moyen pour fournir un courant électrique auxdits revêtements conducteurs de l'électricité.
